# EUROPÄISCHE PATENTSCHRIFT

(11) **EP 3 171 955 B1**
(45) Veröffentlichungstag und Bekanntmachung des Hinweises auf die Patenterteilung: **11.09.2019**
(21) Anmeldenummer: 15744890.3
(22) Anmeldetag: 14.07.2015
(51) Int. Cl.: B01D 3/12, B01D 3/08, F16L 37/12

(54) **ROTATIONSVERDAMPFER MIT EINER BEFESTIGUNGSEINRICHTUNG MIT KLEMMELEMENTEN**
ROTARY EVAPORATOR HAVING A FASTENING DEVICE WITH CLAMPING ELEMENTS
ÉVAPORATEUR ROTATIF AVEC UN DISPOSITIF DE FIXATION À ÉLÉMENTS DE SERRAGE

(30) Priorität: 22.07.2014 DE 102014110343
(43) Veröffentlichungstag der Anmeldung: 31.05.2017
(73) Patentinhaber: Hans Heidolph GmbH, 93309 Kelheim (DE)
(72) Erfinder: DIL, Roman, 90489 Nürnberg (DE)
(74) Vertreter: Manitz Finsterwald Patent- und Rechtsanwaltspartnerschaft mbB
(86) Internationale Anmeldenummer: PCT/EP2015/066058
(87) Internationale Veröffentlichungsnummer: WO 2016/012307

(56) Entgegenhaltungen:
- EP-A1- 2 213 353
- WO-A2-2009/018874
- DE-A1- 1 519 744
- DE-A1- 3 114 449
- DE-A1-102011 115 422
- DE-A1-102012 007 670
- DE-U1- 7 738 469
- US-A- 5 243 836
- US-A- 5 516 159
- US-A1- 2011 272 888

## Beschreibung

Die vorliegende Erfindung betrifft einen Rotationsverdampfer mit einem Rotationsantrieb und einer an dem Rotationsantrieb angebrachten Befestigungseinrichtung mit einem Aufnahmeraum zur Aufnahme eines von dem Rotationsantrieb drehbaren Verdampferkolbens, wobei die Befestigungseinrichtung rotationsantriebsseitig einen insbesondere ringförmigen Anschlussabschnitt und verdampferkolbenseitig ein mit dem Anschlussabschnitt koppelbares oder gekoppeltes insbesondere ringförmiges Überwurfelement umfasst, das relativ zu dem Anschlussabschnitt zwischen einer Ausgangsposition und einer Endposition verdrehbar ist.

Rotationsverdampfer sind Laborgeräte, die zum Verdampfen von Destillaten wie zum Beispiel Lösungsmitteln eingesetzt werden. Üblicherweise wird der am Rotationsantrieb befestige Verdampferkolben mittels eines Heizbads, einer Heizkalotte, eines Heizpilzes oder eines Heizköchers erwärmt, um den Verdampfungsvorgang zu beschleunigen. Durch die Rotation wird der Verdampferkolben gleichmäßig beheizt und an der beheizten Innenwand des Verdampferkolbens wird ein dünner, eine große Oberfläche aufweisender Flüssigkeitsfilm erzeugt, aus dem das Destillat schnell, effizient und schonend verdampft werden kann. Im Prinzip kann eine Verdampfung auch allein durch Erzeugen eines Vakuums bewirkt werden d.h. ein Heizen des Verdampferkolbens ist nicht zwingend erforderlich.

Das verdampfte Destillat strömt über eine Dampfdurchführung in einen Kühler des Rotationsverdampfers, um dort zu kondensieren. Anschließend wird das Kondensat in einem Auffangkolben gesammelt. Der im Verdampferkolben zurückbleibende Destillationsrückstand kann weiter aufgearbeitet oder analysiert werden. Bei Bedarf ist zusätzlich eine Vakuumpumpe zur Erzeugung eines Vakuums in dem Verdampferkolben und dem Kühler vorgesehen, um die Siedetemperatur zu senken, wodurch die Destillation weiter beschleunigt und die Destillationsrate dementsprechend erhöht werden kann.

Zur Befestigung eines Verdampferkolbens am Rotationsantrieb ist es bekannt, eine Überwurfmutter über den Verbindungsflansch des Verdampferkolbens zu legen und dort mit einem Einlagering zu sichern, und die Überwurfmutter dann an einem Außengewinde der Nabe des Rotationsantriebs festzuschrauben. Hierfür ist es notwendig, den Kolbenflansch mit der Überwurfmutter ausreichend genau am Außengewinde der Nabe zu positionieren, die Nabe drehfest zu fixieren und gleichzeitig die Überwurfmutter zu drehen. Insbesondere bei Großrotationsverdampfern, welche Verdampferkolben mit beispielsweise 6 Litern, 10 Litern oder 20 Litern Fassungsvermögen aufnehmen können, ist dieser Befestigungsvorgang für den Benutzer aufgrund des hohen Eigengewichts des Verdampferkolbens, insbesondere eines gefüllten Verdampferkolbens, mit beträchtlichen Schwierigkeiten verbunden. Ähnliche Probleme ergeben sich beim Lösen eines Verdampferkolbens vom Rotationsantrieb. Darüber hinaus ist ein gewisser Kraftaufwand erforderlich, um die Überwurfmutter mit dem erforderlichen Spannmoment an dem Rotationsantrieb Z.B. ist ein Rotationsverdampfer offenbart in DE102011115422A1 oder DE1519744A1. Man ist daher bestrebt, die Handhabung von Rotationsverdampfern zu vereinfachen.

Die Lösung dieser Aufgabe erfolgt durch einen Rotationsverdampfer mit den Merkmalen des Anspruchs 1, und insbesondere dadurch, dass die Befestigungseinrichtung zumindest ein Klemmelement umfasst, das beim Verdrehen des Überwurfelements relativ zu dem Anschlussabschnitt aus der Ausgangsposition in die Endposition aus einer Freigabestellung radial nach innen in eine Haltestellung, in der das jeweilige Klemmelement in den Aufnahmeraum hineinragt, bewegt wird, um eine flanschförmige Anbindungsstelle eines in dem Aufnahmeraum der Befestigungseinrichtung aufgenommenen Verdampferkolbens form- und/oder kraftschlüssig festzuhalten und diesen gegen eine Entnahme aus dem Aufnahmeraum zu sichern.

Die Erfindung sieht demnach vor, dass eine Drehbewegung des Überwurfelements in eine radial nach innen gerichtete Bewegung des zumindest einen Klemmelements umgesetzt wird. Durch das zumindest eine Klemmelement kann die flanschförmige Anbindungsstelle eines in dem Aufnahmeraum der Befestigungseinrichtung aufgenommenen Verdampferkolbens form- und/oder kraftschlüssig festgehalten werden. Insbesondere kann die flanschförmige Anbindungsstelle von dem zumindest einem Klemmelement hintergriffen werden.

Sofern in der vorliegenden Anmeldung von einem oder dem Klemmelement die Rede ist, bezieht sich dies insbesondere auf das Klemmelement und/oder wenigstens eines oder sämtliche von mehreren Klemmelementen. Bei Vorliegen mehrerer Klemmelemente können diese auch als Klemmsegmente bezeichnet werden. Insbesondere ist die Befestigungseinrichtung derart ausgebildet, dass mehrere Klemmelemente beim Verdrehen des Überwurfelements relativ zu dem Anschlussabschnitt aus der Ausgangsposition in die Endposition jeweils aus einer Freigabestellung radial nach innen in eine Haltestellung bewegt werden. Die flanschförmige Anbindungsstelle eines Verdampferkolbens kann dann von mehreren, in Umfangsrichtung verteilt angeordneten Klemmelementen form- und/oder kraftschlüssig umschlossen werden.

Insbesondere umfasst der von dem ringförmigen Anschlussabschnitt und/oder dem ringförmigen Überwurfelement umschlossene Innenraum den Aufnahmeraum, ist das Überwurfelement radial außerhalb des Anschlussabschnitts angeordnet und/oder ist das Klemmelement in der Freigabestellung gegenüber der Haltestellung aus der Aufnahmeöffnung zurückgezogen, insbesondere derart, dass der flanschförmige Verbindungsabschnitt eines Verdampferkolbens in den Aufnahmeraum der Befestigungseinrichtung einführbar ist. Bevorzugt wird das Überwurfelement dadurch relativ zu dem Anschlussabschnitt verdreht, dass der Anschlussabschnitt drehfest gehalten und das Überwurfelement verdreht wird.

Nach einer bevorzugten Ausführungsform der Erfindung wird das jeweilige Klemmelement beim Verdrehen des Überwurfelements relativ zu dem Anschlussabschnitt aus der Ausgangsposition in die Endposition radial nach innen und gleichzeitig axial auf den Anschlussabschnitt zu bewegt. Die Bewegung des Klemmelements radial nach innen bei einer Verdrehung des Überwurfelements relativ zu dem Anschlussabschnitt aus der Ausgangsposition in die Endposition kann demnach von einer axialen Bewegung des Klemmelements, und zwar auf den Anschlussabschnitt zu, die zusätzlich auftritt, überlagert werden. Grundsätzlich ist es jedoch auch möglich, dass das Klemmelement beim Verdrehen des Überwurfelements relativ zu dem Anschlussabschnitt eine Bewegung erfährt, die lediglich radial nach innen gerichtet ist.

Der Anschlussabschnitt kann an dem Rotationsantrieb, insbesondere einer Nabe des Rotationsantriebs, befestigt sein, insbesondere über eine oder mehrere Schraubverbindungen. Der Anschlussabschnitt kann von dem Rotationsantrieb separat ausgebildet sein. Insbesondere kann der Anschlussabschnitt als Anschlussring ausgebildet sein. Alternativ kann der Anschlussabschnitt auch ein Ende der Nabe des Rotationsantriebs bilden. Der Anschlussabschnitt kann einstückig mit der Nabe des Rotationsantriebs ausgebildet sein. Das Ende der Nabe kann aus einem Gehäuse des Rotationsantriebs hervorstehen.

Bevorzugt ist das Überwurfelement lösbar mit dem Anschlussabschnitt koppelbar oder gekoppelt, insbesondere verbindbar oder verbunden, insbesondere axial auf den Anschlussabschnitt in die Ausgangsposition aufsetzbar. Das Überwurfelement kann dann zerstörungsfrei von dem Anschlussabschnitt entfernt werden bzw. die Befestigungseinrichtung kann zerstörungsfrei zerlegt werden.

Die Kopplung, insbesondere Verbindung, des Überwurfelements mit dem Anschlussabschnitt kann schraubverbindungsfrei erfolgen. Anders als in dem eingangs genannten Stand der Technik wird das Überwurfelement dann nicht auf ein an der Nabe des Rotationsantriebs ausgebildetes Außengewinde aufgeschraubt. Allgemein kann die Kopplung des Überwurfelements mit dem Anschlussabschnitt durch eine Steck-Dreh-Bewegung erfolgen, insbesondere durch einen Bajonett-Verschluss.

Das Überwurfelement kann in einer oder mehreren diskreten Drehpositionen, beispielsweise drei diskreten Drehpositionen, auf den Anschlussabschnitt in die Ausgangsposition aufsetzbar sein. Ein Aufsetzen des Überwurfelements auf den Anschlussabschnitt unter einem beliebigen Drehwinkel ist dann nicht möglich. Die Kopplung des Überwurfelements mit dem Anschlussabschnitt kann demnach eine mehrzählige Symmetrieachse aufweisen.

Nach einer bevorzugten Ausführungsform der Erfindung umfasst der Anschlussabschnitt mehrere radial nach außen vorstehende erste Eingriffselemente, und das Überwurfelement umfasst mehrere radial nach innen vorstehende zweite Eingriffselemente, wobei die ersten Eingriffselemente und die zweiten Eingriffselemente in der Ausgangsposition kämmend ineinandergreifen und in einer verdrehten Position einander hintergreifen. Hierdurch kann eine einfache und sichere Kopplung des Überwurfelements mit dem Anschlussabschnitt erreicht werden. Vorzugsweise sind die ersten Eingriffselemente und die zweiten Eingriffselemente jeweils in Umfangsrichtung gleichverteilt an dem Anschlussabschnitt bzw. dem Überwurfelement angeordnet. Hierdurch kann gewährleistet werden, dass das Überwurfelement in mehreren diskreten Drehpositionen auf den Anschlussabschnitt in die Ausgangsposition aufsetzbar ist.

Insbesondere ist das jeweilige Klemmelement zwischen dem Anschlussabschnitt und dem Überwurfelement angeordnet. Insbesondere kann beim Verdrehen des Überwurfelements relativ zu dem Anschlussabschnitt aus der Ausgangsposition in die Endposition das jeweilige Klemmelement von dem Überwurfelement, insbesondere einem an den Überwurfelement radial nach innen vorstehenden Ringsteg, axial gegen den Anschlussabschnitt, insbesondere ein jeweiliges erstes Eingriffselement wie es vorstehend erläutert ist, gedrückt werden.

Nach einer bevorzugten Ausführungsform der Erfindung sind Mittel vorgesehen, die ein Verdrehen des Überwurfelements relativ zu dem Anschlussabschnitt aus der Ausgangsposition in die Endposition in eine Axialbewegung des Überwurfelements relativ zu dem Anschlussabschnitt umsetzen, wobei weitere Mittel vorgesehen sind, die die Axialbewegung des Überwurfelements in die radiale Bewegung, insbesondere die radiale und gleichzeitig eine axiale Bewegung, des jeweiligen Klemmelements umsetzen.

Vorzugsweise umfassen hierfür die Mittel miteinander korrespondierende Schrägflächen, die an dem Anschlussabschnitt einerseits, insbesondere an den vorstehend erläuterten radial nach außen vorstehenden ersten Eingriffselementen, und dem Überwurfelement andererseits, insbesondere an den vorstehend erläuterten radial nach innen vorstehenden zweiten Eingriffselementen, ausgebildet sind. Über die Schrägflächen wird die Drehbewegung des Überwurfelements in die Axialbewegung des Überwurfelements umgesetzt.

Die weiteren Mittel können umfassen, dass das jeweilige Klemmelement an seiner dem Anschlussabschnitt zugewandten, radial äußeren Kante abschrägt ist und der Anschlussabschnitt, insbesondere ein jeweiliges erstes Eingriffselement wie es vorstehend erläutert ist, eine hiermit korrespondierende Abschrägung aufweist, wodurch das jeweilige Klemmelement beim Verdrehen des Überwurfelements relativ zu dem Anschlussabschnitt in die Endposition radial nach innen und axial auf den Anschlussabschnitt zu bewegt wird. Grundsätzlich ist es jedoch auch möglich, beispielsweise durch miteinander korrespondierende Schrägflächen an dem Überwurfelement und dem jeweiligen Klemmelement, wobei an dem Klemmelement und dem Anschlussabschnitt keine miteinander korrespondierenden Abschrägungen vorgesehen sind, dass das jeweilige Klemmelement beim Verdrehen des Überwurfelements relativ zu dem Anschlussabschnitt lediglich radial nach innen bewegt wird.

Um die flanschförmige Anbindungsstelle eines in dem Aufnahmeraum der Befestigungseinrichtung aufgenommenen Verdampferkolbens form- und kraftschlüssig festzuhalten, ist es bevorzugt, wenn das jeweilige Klemmelement an seiner dem Anschlussabschnitt zugewandten, radial inneren Kante abgeschrägt ist, um mit einer hiermit korrespondierenden Abschrägung an der flanschförmigen Anbindungsstelle eines in der Befestigungseinrichtung aufgenommenen Verdampferkolbens zusammenzuwirken.

Vorzugsweise ist das jeweilige Klemmelement aus seiner Haltestellung in die Freigabestellung vorgespannt. Das jeweilige Klemmelement kann dann, beim Zurückdrehen des Überwurfelements relativ zu dem Anschlussabschnitt aus der Haltestellung in die Freigabestellung zurück bewegt werden, um die flanschförmige Anbindungsstelle eines in dem Aufnahmeraum der Befestigungseinrichtung aufgenommenen Verdampferkolbens wieder für eine Entnahme des Verdampferkolbens freizugeben. Zur Vorspannung des jeweiligen Klemmelements kann ein Federring vorgesehen sein, der insbesondere an einer radialen Innenfläche des jeweiligen Klemmelements angreift. Insbesondere kann bei mehreren Klemmelementen ein gemeinsamer Federring vorgesehen sein, der an den radialen Innenflächen der Klemmelemente angreift.

Bevorzugt ist das jeweilige Klemmelement langestreckt und/oder teilkreisförmig ausgebildet. Bei mehreren Klemmelementen ist es bevorzugt, wenn diese in Umfangsrichtung gleichverteilt angeordnet sind. Das jeweilige Klemmelement kann mit einem jeweiligen ersten Eingriffselement des Anschlussabschnitts, wie es vorstehend erläutert ist, zusammenwirken.

Nach einer bevorzugten Ausführungsform der Erfindung ist zum Verdrehen das Überwurfelement mit einem Spannhebel versehen, der mit einem Ende an einem Anlenkpunkt schwenkbar an dem Überwurfelement gelagert und zwischen einer geöffneten Stellung und einer geschlossenen Stellung, in der das jeweilige Klemmelement die Haltestellung einnimmt, verstellbar ist. Durch einen Spannhebel können mit geringerem Kraftaufwand höhere Spannmomente erreicht werden als mit der Überwurfmutter gemäß dem eingangs genannten Stand der Technik, wodurch eine bessere Dichtheit der Verbindung zwischen Verdampferkolben und Rotationsantrieb bzw. Verdampferkolben und Dampfdurchführung erreicht werden kann.

Dabei ist es bevorzugt, wenn der Spannhebel derart mit dem Überwurfelement und dem Anschlussabschnitt gekoppelt ist, dass das Verdrehen des Überwurfelements relativ zu dem Anschlussabschnitt aus der Ausgangsposition in die Endposition zweistufig erfolgt, wobei in einer ersten Stufe das Überwurfelement mit geöffnetem Spannhebel aus der Ausgangsposition um einen ersten Teilweg in eine Anschlagposition für den Spannhebel verdreht wird, und wobei in einer zweiten Stufe der Spannhebel geschlossen wird, um das Überwurfelement aus der Anschlagposition um einen zweiten Teilweg in die Endposition zu verdrehen. In dem ersten Teilweg kann das jeweilige Klemmelement radial nach innen in Richtung der Haltestellung an eine flanschförmige Anbindungsstelle eines in dem Aufnahmeraum der Befestigungseinrichtung aufgenommenen Verdampferkolbens herangefahren werden, wobei ein form- und/oder kraftschlüssiges Festhalten der flanschförmigen Anbindungsstelle bzw. das eigentliche Spannen erst in dem zweiten Teilweg erfolgt.

Hierbei ist es von Vorteil, wenn der erste Teilweg länger ist als der zweite Teilweg, insbesondere wenigstens zweimal länger, bevorzugt wenigstens viermal länger. Durch einen vergleichsweise langen ersten Teilweg kann die Freigabestellung des jeweiligen Klemmelements ausreichend weit aus dem Aufnahmeraum zurückgezogen liegen, um ein problemloses Einsetzen einer flanschförmigen Anbindungsstelle eines Verdampferkolbens in den Aufnahmeraum zu ermöglichen.

Insbesondere erfolgt auch das Zurückdrehen des Überwurfelements relativ zu dem Anschlussabschnitt aus der Endposition in die Ausgangsposition zweistufig, wobei in einer ersten Stufe der Spannhebel geöffnet wird, um das Überwurfelement um den zweiten Teilweg aus der Endposition zurückzudrehen, und in einer zweiten Stufe wird das Überwurfelement mit geöffnetem Spannhebel in die Ausgangsposition zurückgedreht.

Die Längserstreckung des Spannhebels verläuft bevorzugt in Umfangsrichtung des Überwurfelements. Vorzugsweise ist der Spannhebel teilkreisförmig ausgebildet und/oder in der geschlossenen Stellung in einer radial äußeren Vertiefung des Überwurfelements aufgenommen. Um eine einfache Betätigung des Spannhebels über dessen gesamten Schwenkbereich zu gewährleisten, ist es bevorzugt, wenn der Schwenkbereich des Spannhebels zwischen der geöffneten Stellung und der geschlossenen Stellung nicht mehr als 120°, insbesondere nicht mehr als 100° beträgt.

Insbesondere kann der Spannhebel beim Schließen als Kniehebel wirken, um das Überwurfelement aus der Anschlagposition um den vorstehend erläuterten zweiten Teilweg in die Endposition zu verdrehen.

Nach einer bevorzugten Ausführungsform der Erfindung ist ein Lenker vorgesehen, der mit einem ersten Ende schwenkbar an dem Anschlussabschnitt, insbesondere mittelbar oder unmittelbar, gelagert ist und mit einem zweiten Ende über ein Führungselement, insbesondere einen Zylinderstift, mit einer an dem Spannhebel ausgebildeten Steuerkurve, insbesondere einem Führungsschlitz, in Eingriff steht. Beispielsweise hierdurch wird das vorstehend erläuterte zweistufige Verdrehen des Überwurfelements relativ zu dem Anschlusselement ermöglicht.

Das erste Ende des Lenkers kann dabei an einem Spannelement schwenkbar gelagert sein, das in eine entsprechend ausgebildete Aufnahme des Anschlussabschnitts eingesetzt ist, die ein Verdrehen des Spannelements relativ zu dem Anschlussabschnitt verhindert. Insbesondere kann das Spannelement zwischen zwei radial nach außen vorstehende Eingriffselemente des Anschlussabschnitts, insbesondere erste Eingriffselemente, wie sie vorstehend erläutert sind, eingesetzt sein.

Vorzugsweise weist die Steuerkurve einen ersten, insbesondere geraden, Abschnitt und einen sich daran an einem Knickpunkt winklig anschließenden zweiten, insbesondere geraden, Abschnitt mit Endpunkt auf. Durch die Abwinklung des zweiten Abschnitts gegenüber dem ersten Abschnitt kann gewährleisten werden, dass einerseits das Führungselement beim Schließen des Spannhebels nicht in Richtung eines nachstehend noch näher erläuterten Ausgangspunkts ausweichen kann und andererseits das Öffnen des Spannhebels zu Beginn im Wesentlichen ohne Kraftaufwand möglich ist.

Hierzu kann der erste Abschnitt in der geschlossenen Stellung des Spannhebels zumindest im Wesentlichen tangential und/oder in der geöffneten Stellung zumindest im Wesentlichen radial zu dem Überwurfelement verlaufen und/oder der zweite Abschnitt kann in der geschlossenen Stellung des Spannhebels von dem Überwurfelement weg gegenüber dem ersten Abschnitt abgewinkelt sein. Alternativ und/oder zusätzlich kann der erste Abschnitt und/oder der zweite Abschnitt zumindest im Wesentlichen entlang der Längserstreckung des Spannhebels verlaufen.

Es ist bevorzugt, wenn das Führungselement in der Ausgangsposition des Überwurfelements sich an einem Ausgangspunkt in dem ersten Abschnitt befindet und beim Verdrehen des Überwurfelements relativ zu dem Anschlussabschnitt um den vorstehend erläuterten ersten Teilweg an den Endpunkt verfahren wird und/oder dass das Führungselement beim Verdrehen des Überwurfelements relativ zu dem Anschlussabschnitt um den vorstehend erläuterten zweiten Teilweg am Endpunkt verharrt. Darüber hinaus ist es bevorzugt, wenn das Führungselement beim Zurückdrehen des Überwurfelements relativ zu dem Anschlussabschnitt um den zweiten Teilweg an den Knickpunkt verfahren wird und/oder dass das Führungselement beim Zurückdrehen des Überwurfelements relativ zu dem Anschlussabschnitt um den ersten Teilweg an den Ausgangspunkt verfahren wird.

Im Übrigen kann der Lenker längenverstellbar ausgebildet sein. Hierzu kann der Lenker eine Spannschraube und eine Spannmutter umfassen. Insbesondere kann die Spannmutter verschieden weit, insbesondere kontinuierlich, auf die Spannschraube aufgeschraubt werden, um die Länge des Lenkers einzustellen. Über die Länge des Lenkers kann dann der vorstehend erläuterte Ausgangspunkt des Führungselements in dem ersten Abschnitt der Steuerkurve einstellbar sein. Letztlich kann über die Länge des Lenkers das durch den Spannhebel in der geschlossenen Stellung ausgeübte Spannmoment eingestellt werden.

Bevorzugt ist eine Rasteinrichtung vorgesehen, um den Spannhebel in der geschlossenen Stellung am Überwurfelement zu verriegeln. Dies kann beispielsweise durch einen Raster erreicht werden, der schwenkbar in dem Spannhebel gelagert ist und in eine in oder an dem Überwurfelement ausgebildete Rastaufnahme eingreift. Der Raster kann in Richtung einer Raststellung vorgespannt sein. Der Raster kann eine Rastnase aufweisen, die in einer Raststellung eine Rastkante der Rastaufnahme hintergreift.

Vorzugsweise ist die dem Anschlussabschnitt abgewandte, radial innere Kante des Überwurfelements mit einem äußeren Kantenschutzring und/oder die dem Überwurfelement zugewandte, radial innere Kante des Anschlussabschnitts mit einem inneren Kantenschutzring versehen ist. Neben der Funktion als Kantenschutz, um einen Bruch des Verdampferkolbens beim Einsetzen in den Aufnahmeraum zu verhindern, kann der äußere Kantenschutzring und/oder der innere Kantenschutzring auch noch eine Zentrierfunktion bzw. Einsetzhilfe für den einzusetzenden Verdampferkolben wahrnehmen.

Für die Kantenschutz- und/oder Zentrierfunktion ist es bevorzugt, wenn die die dem Anschlussabschnitt abgewandte, radial innere Kante des äußeren Kantenschutzrings abgeschrägt ist und/oder die die dem Überwurfelement zugewandte, radial innere Kante des inneren Kantenschutzrings abgeschrägt ist.

Darüber hinaus ist es bevorzugt, wenn der größte Innendurchmesser der Abschrägung des inneren Kantenschutzrings nicht kleiner ist als der kleinste Innendurchmesser der Abschrägung des äußeren Kantenschutzrings. Hierdurch kann das Einsetzen des Verdampferkolbens in den Aufnahmeraum weiter vereinfacht werden.

Die vorliegende Erfindung betrifft weiterhin eine Befestigungseinrichtung, insbesondere für einen Rotationsverdampfer, mit einem Aufnahmeraum zur Aufnahme eines Laborbehälters, insbesondere eines Verdampferkolbens, wobei die Befestigungseinrichtung einen insbesondere ringförmigen Anschlussabschnitt und ein mit dem Anschlussabschnitt gekoppeltes insbesondere ringförmiges Überwurfelement umfasst, das relativ zu dem Anschlussabschnitt zwischen einer Ausgangsposition und einer Endposition verdrehbar ist, und wobei die Befestigungseinrichtung zumindest ein Klemmelement umfasst, das beim Verdrehen des Überwurfelements relativ zu dem Anschlussabschnitt aus der Ausgangsposition in die Endposition aus einer Freigabestellung radial nach innen in eine Haltestellung, in der das jeweilige Klemmelement in den Aufnahmeraum hineinragt, bewegt wird, um eine flanschförmige Anbindungsstelle eines in dem Aufnahmeraum der Befestigungseinrichtung aufgenommenen Laborgeräts form- und/oderkraftschlüssig festzuhalten und dieses gegen eine Entnahme aus dem Aufnahmeraum zu sichern.

Weiterbildungen der erfindungsgemäßen Befestigungseinrichtung ergeben sich in analoger Weise aus den vorstehend zu dem erfindungsgemäßen Rotationsverdampfer beschriebenen Weiterbildungen.

Weiterbildungen der Erfindung sind auch in den abhängigen Ansprüchen, der Beschreibung sowie der beigefügten Zeichnung angegeben.

Nicht beschränkende Ausführungsbeispiele der Erfindung sind in der Zeichnung dargestellt und werden nachfolgend beschrieben. Es zeigen,
- Fig. 1: eine perspektivische Ansicht einer erfindungsgemäßen Befestigungseinrichtung für einen Rotationsverdampfer,
- Fig. 2: die Befestigungseinrichtung aus Fig. 1 in einer Frontalansicht,
- Fig. 3: einen Längsschnitt durch die Befestigungseinrichtung aus Fig. 1 entlang der Linie A-A in Fig. 2 mit eingesetztem Verdampferkolben,
- Fig. 4: eine Explosionsdarstellung der Befestigungseinrichtung aus Fig. 1,
- Fig. 5: einen Querschnitt durch die Befestigungseinrichtung aus Fig. 1 entlang der Linie B-B in Fig. 3, wobei ein Überwurfelement in einer ersten Drehposition und ein Spannhebel in einer geöffneten Stellung gezeigt sind,
- Fig. 6: die Ansicht aus Fig. 5, wobei das Überwurfelement im Uhrzeigersinn um einen Teil eines ersten Teilwegs gedreht ist,
- Fig. 7: die Ansicht aus Fig. 5, wobei das Überwurfelement im Uhrzeigersinn um einen ersten Teilweg gedreht ist,
- Fig. 8: die Ansicht aus Fig. 7, wobei der Spannhebel teilweise geschlossen ist, und
- Fig. 9: die Ansicht aus Fig. 7, wobei der Spannhebel vollständig geschlossen ist.

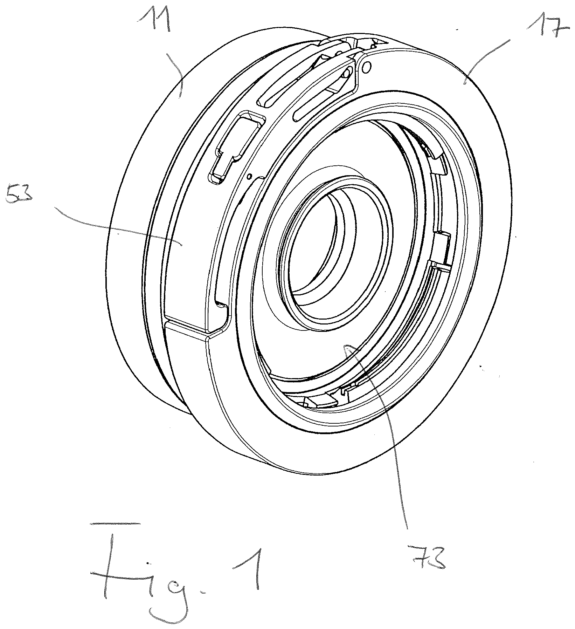

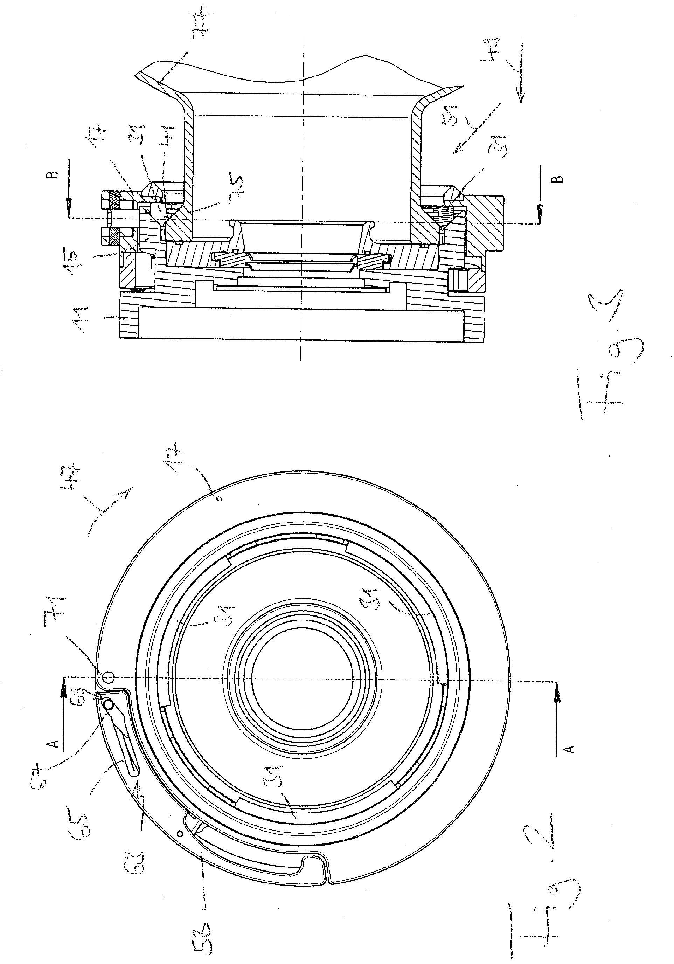

Die in den Fig. 1 bis 4 dargestellte erfindungsgemäße Befestigungseinrichtung für einen Verdampferkolben 77 eines Rotationsverdampfers umfasst zunächst einen ringförmigen Anschlussabschnitt 11, der an eine nicht dargestellte, in Fig. 3 links des Anschlussabschnitts 11 befindliche Nabe eines Rotationsantriebs eines Rotationsverdampfers anschraubbar ist. Der Anschlussabschnitt 11 weist einen Anschlussstutzen 13 auf, an dem drei in Umfangsrichtung gleichverteilt angeordnete, radial nach außen vorstehende erste Eingriffselemente 15 vorgesehen sind. Darüber hinaus umfasst die Befestigungseinrichtung ein ringförmiges, zweiteiliges Überwurfelement 17, das einen Bajonettring 19 und einen Tragering 21 umfasst. Die beiden Ringe 19, 21 sind miteinander verschraubt, d.h. fest miteinander verbunden. Der Bajonettring 19 weist eine der Anzahl der ersten Eingriffselemente 15 entsprechende Anzahl an radial nach innen vorstehenden zweiten Eingriffselementen 23 auf, d.h. drei zweite Eingriffselemente 23, die in Umfangsrichtung gleichverteilt an dem Bajonettring 19 vorgesehen sind.

Zur Montage der Befestigungseinrichtung wird das Überwurfelement 17 in einer von drei möglichen Drehpositionen axial auf den Anschlussabschnitt 11 aufgesetzt, derart, dass die ersten Eingriffselemente 15 und die zweiten Eingriffselemente 23 kämmend ineinandergreifen bzw. aneinander vorbeigleiten. Anschließend wird das Überwurfelement 17 durch eine Montageschraube 25 an dem Anschlussabschnitt 11, die sich durch eine Bohrung in dem Tragering 21 hindurch hinter eines der ersten Eingriffselemente 15 erstreckt, lösbar abnehmbar gehalten. Das Überwurfelement 17 befindet sich dann in einer Ausgangsposition relativ zu dem Anschlussabschnitt 11. Der von dem Anschlussabschnitt 11 und den beiden Ringen 19, 21 umschlossene Innenraum stellt einen Aufnahmeraum 73 bereit, in dem eine flanschförmige Anbindungsstelle 75 eines Verdampferkolbens 77 aufgenommen werden kann.

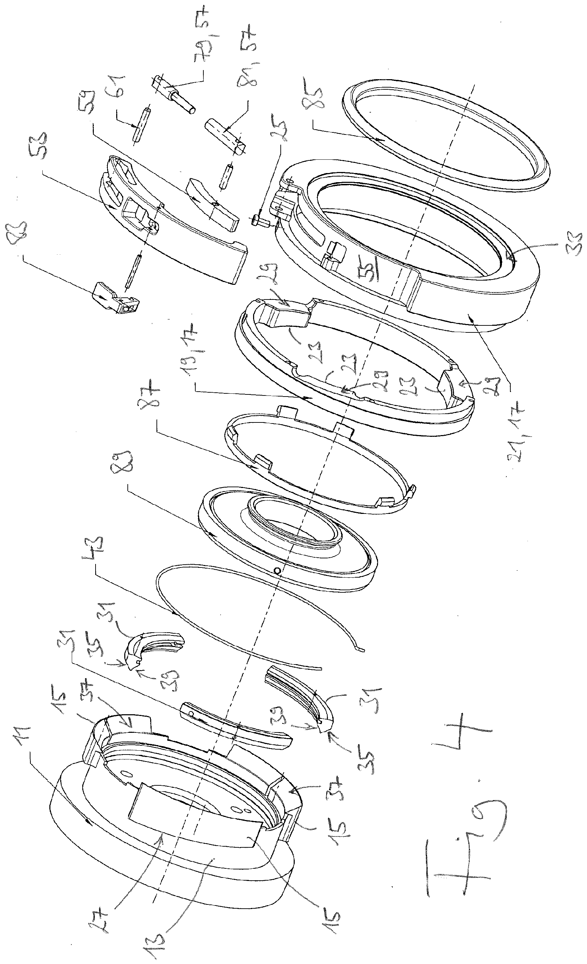

Aus dieser Ausgangsposition kann das Überwurfelement 17 relativ zu dem Anschlussabschnitt 11 in eine Endposition verdreht werden, in der die vorgenannte flanschförmige Anbindungsstelle 75 eines in dem Aufnahmeraum 73 der Befestigungseinrichtung aufgenommenen Verdampferkolbens 77 form- und/oder kraftschlüssig festgehalten wird. Dabei hintergreifen die ersten und zweiten Eingriffselemente 15, 23 einander. Da die in Fig. 4 nach links gerichteten axialen Seitenflächen der ersten Eingriffselemente 15 jeweils mit einer ersten Schrägfläche 27 versehen sind und die nach rechts gerichteten axialen Seitenflächen der zweiten Eingriffselemente 23 jeweils mit einer hiermit korrespondierenden zweiten Schrägfläche 29, wird die Drehbewegung 47 des Überwurfelements 17 aus der Ausgangsposition in die Endposition in eine Axialbewegung 49 des Überwurfelements 17 auf den Anschlussabschnitt 11 umgesetzt (vgl. Fig. 3). Beim Verdrehen des Überwurfelements 17 relativ zu dem Anschlussabschnitt 11 wird der Anschlussabschnitt 11 vorteilhafterweise drehfest gehalten.

Zwischen dem Anschlussabschnitt 11 und dem Überwurfelement 17 sind drei in Umfangsrichtung gleichverteilt angeordnete Klemmelemente 31 vorgesehen. Dabei sind die Klemmelemente 31 jeweils an einem der ersten Eingriffselemente 15 gelagert. Die Klemmelemente 31 sind jeweils in Umfangsrichtung langgestreckt und teilkreisförmig ausgebildet. Beim Verdrehen des Überwurfelementes 17 aus der Ausgangsposition in die Endposition drückt ein an dem Überwurfelement 17 ausgebildeter, radial nach innen vorstehender Ringsteg 33 die Klemmelemente 31 axial gegen die ersten Eingriffselemente 15. Da die Klemmelemente 31 an ihren dem Anschlussabschnitt 11 zugewandten, radial äußeren Kanten jeweils eine Abschrägung 35 aufweisen und die ersten Eingriffselemente 15 eine hiermit jeweils korrespondierende Abschrägung 37 aufweisen, verfahren die Klemmelemente 31 beim Verdrehen des Überwurfelementes 17 radial nach innen und axial auf den Anschlussabschnitt 11 zu, d.h. die Axialbewegung 49 des Überwurfelements 17 wird in eine kombinierte Radial- und Axialbewegung 51 der Klemmelemente 31 umgesetzt (vgl. Fig. 3).

Die Klemmelemente 31 werden beim Verdrehen des Überwurfelements 17 aus der Ausgangsposition in die Endposition aus einer Freigabestellung, in der die Klemmelemente 31 aus dem Aufnahmeraum 73 der Befestigungseinrichtung zurückgezogen sind, in eine Haltestellung verfahren, in der die Klemmelemente 31 in den Aufnahmeraum 73 derart hineinragen, dass eine flanschförmige Anbindungsstelle 75 eines in dem Aufnahmeraum 73 aufgenommenen Verdampferkolbens 77 form- und kraftschlüssig klemmend gehalten werden kann. Das klemmende Halten wird insbesondere dadurch erreicht, dass die Klemmelemente 31 an ihren dem Anschlussabschnitt 11 zugewandten, radial inneren Kanten eine weitere Abschrägung 39 aufweisen, die klemmend auf eine hiermit korrespondierende Abschrägung 41 an der vorgenannten flanschförmigen Anbindungsstelle 75 des Verdampferkolbens 77 drücken (Fig. 3). Um beim Zurückdrehen des Überwurfelements 17 den Verdampferkolben 77 für eine Entnahme aus dem Aufnahmeraum 73 wieder freizugeben, ist ein Federring 43 vorgesehen, der an einer radialen Innenfläche der Klemmelemente 31 angreift und diese unter Vorspannung radial nach außen drückt.

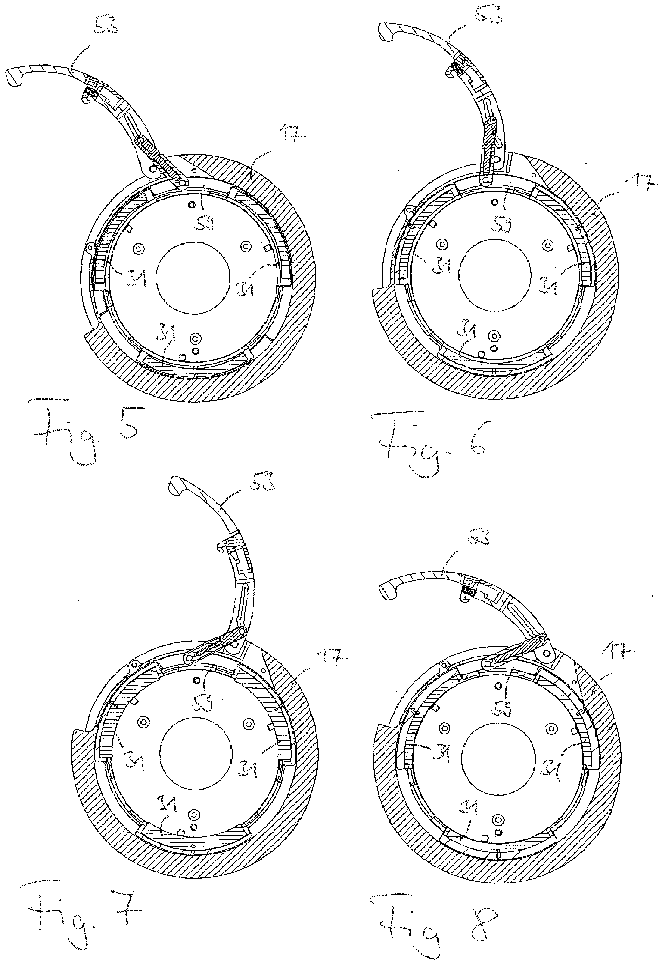

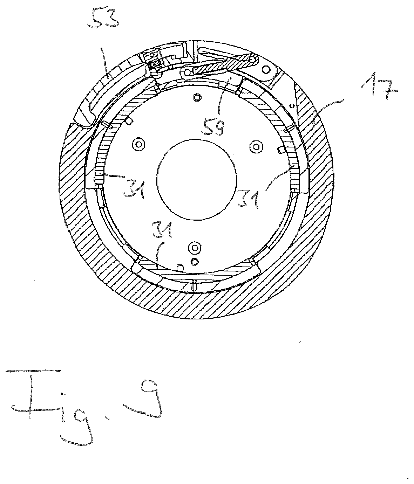

Zum Verdrehen ist das Überwurfelement 17 mit einem Spannhebel 53 versehen. Der Spannhebel 53 ist mit einem Ende an einem Anlenkpunkt 71 schwenkbar an dem Überwurfelement 17 gelagert und zwischen der in den Fig. 5 bis 7 gezeigten geöffneten Stellung und der in Fig. 9 gezeigten geschlossenen Stellung, in der die Klemmelemente 31 ihre Haltestellung einnehmen, verstellbar, wobei die beiden Stellungen einen Schwenkbereich von zumindest im Wesentlichen 90° begrenzen. Der Spannhebel 53 ist teilkreisförmig ausgebildet und seine Längserstreckung verläuft in Umfangsrichtung des Überwurfelements 17. Um den Spannhebel 53 in das Überwurfelement 17 zu integrieren, ist an einer radialen Außenseite des Überwurfelements 17 eine Vertiefung 55 ausgebildet, in der der Spannhebel 53 in der geschlossenen Stellung aufgenommen ist.

Darüber hinaus ist ein Lenker 57 vorgesehen, der mit einem ersten Ende schwenkbar an einem Spannelement 59 gelagert ist. Das Spannelement 59 ist in den Raum zwischen zwei ersten Eingriffselementen 15 des Anschlussabschnitts 11 eingesetzt, derart, dass eine Drehung des Spannelements 59 relativ zu dem Anschlussabschnitt 11 nicht möglich ist. Mit dem zweiten Ende greift der Lenker 57 über einen Zylinderstift 61 in eine in dem Spannhebel 53 als Führungsschlitz ausgebildete Steuerkurve 63 ein. Die Steuerkurve 63 weist einen ersten geraden Abschnitt 65 und einen zweiten geraden Abschnitt 67 mit einem Endpunkt 69 auf, wobei der zweite Abschnitt 67 an einem Knickpunkt winklig an den ersten Abschnitt 65 anschließt. Der erste Abschnitt 65 verläuft in der geschlossenen Stellung des Spannhebels 53 tangential und in der geöffneten Stellung des Spannhebels 53 radial zu dem Überwurfelement 17. Der zweite Abschnitt 67 ist in der geschlossenen Stellung des Spannhebels 53 von dem Überwurfelement 17 weg gegenüber dem ersten Abschnitt 65 geneigt.

Das Befestigen bzw. Lösen einer flanschförmigen Anbindungsstelle 75 eines in dem Aufnahmeraum 73 der Befestigungseinrichtung aufgenommenen Verdampferkolbens 77 erfolgt wie folgt:

In Fig. 5 befindet sich das Überwurfelement 17 in seiner Ausgangsposition, die Klemmelemente 31 befinden sich in ihrer Freigabestellung und der Spannhebel 53 ist geöffnet. In diesem Zustand der Befestigungseinrichtung wird eine flanschförmige Anbindungsstelle 75 eines Verdampferkolbens 77 in den Aufnahmeraum 73 der Befestigungseinrichtung eingeführt.

Anschließend wird in einer ersten Stufe das Überwurfelement 17 mit geöffnetem Spannhebel 53 aus der Ausgangsposition im Uhrzeigersinn gegenüber dem Anschlusselement 11 um einen ersten Teilweg verdreht, bis der Zylinderstift 61, der sich in Fig. 5 noch an seinem Ausgangspunkt befindet, an dem Endpunkt 69 der Steuerkurve 63 anschlägt. Dies entspricht einer Anschlagposition für den Spannhebel 53. Eine weitere Drehung des Überwurfelements 17 mit geöffnetem Spannhebel 53 ist dann nicht mehr möglich. Aufgrund der an den ersten und zweiten Eingriffselementen 15, 23 ausgebildeten Schrägflächen 27, 29 und der an den Klemmelementen 31 und den ersten Eingriffselementen ausgebildeten Abschrägungen 35, 37 wird die Drehbewegung des Überwurfelements 17 letztlich in eine Bewegung der Klemmelemente 31 mit radial nach innen gerichteter Komponente aus ihrer Freigabestellung umgesetzt, d.h. die Klemmelemente 31 nähern sich ihrer Haltestellung an, in der sie die flanschförmige Anbindungsstelle 75 des in den Aufnahmeraum 73 der Befestigungseinrichtung eingesetzten Verdampferkolbens 77 klemmend umfassen. Dies ist in den Fig. 6 und 7 gezeigt.

Danach wird in einer zweiten Stufe der Spannhebel 53 geschlossen. Hierbei wird das Überwurfelement 17 weiter, um einen zweiten Teilweg, der im Vergleich zu dem ersten Teilweg wesentlich kürzer ist, in seine Endposition verdreht. Das weitere Verdrehen des Überwurfelements 17 um den zweiten Teilweg ist letztlich darauf zurückzuführen, dass nach Art eines Kniehebels der Anlenkpunkt 71 des Spannhebels 53 beim Schließen des Spannhebels 53 im Uhrzeigersinn bewegt wird. Der Zylinderstift 61 bewegt sich dabei nicht aus dem Endpunkt 69 heraus, d.h. das Schließen des Spannhebels 53 erfolgt um eine bezüglich des Spannhebels 53 ortsfeste Drehachse. Die Klemmelemente 31 werden weiter mit radial nach innen gerichteter Komponente verfahren, um in der geschlossenen Stellung des Spannhebels 53 ihre Haltestellung zu erreichen, in der sie die flanschförmige Anbindungsstelle 75 des eingesetzten Verdampferkolbens 77 klemmend festhalten. Dies ist in den Fig. 8 und 9 gezeigt.

Um den Verdampferkolben 77 wieder aus der Befestigungseinrichtung entnehmen zu können, wird in einer ersten Stufe der Spannhebel 53 wieder geöffnet, wodurch das Überwurfelement 17 um den zweiten Teilweg zurückgedreht wird. Der Zylinderstift 61 läuft in der ersten Stufe bis an den Knickpunkt zwischen den beiden Abschnitten 65, 67 der Steuerkurve 63 zurück, wobei hierbei im Wesentlichen keine Kraft durch einen Bediener aufgewandt werden muss. In einer zweiten Stufe wird das Überwurfelement dann mit geöffnetem Spannhebel 53 durch Anziehen an dem Spannhebel 53 um den ersten Teilweg zurück in die Ausgangsposition gedreht, und der Zylinderstift 61 läuft an seinen Ausgangspunkt zurück. Der Federring 43 sorgt dabei aufgrund seiner Vorspannung dafür, dass in beiden Stufen auch die Klemmelemente 31 wieder radial nach außen, aus dem Aufnahmeraum 73 heraus, zurück in Richtung ihrer Freigabestellung gedrückt werden.

Der Lenker 57 ist in seiner Länge verstellbar. Hierfür umfasst der Lenker 57 eine Spannschraube 79 und eine Spannmutter 81. Über die Länge des Lenkers 57 kann der Ausgangspunkt des Zylinderstifts 61 in der Steuerkurve 63 und das durch den Spannhebel 53 in der geschlossenen Stellung ausgeübte Spannmoment eingestellt werden. Darüber hinaus ist ein in dem Spannhebel 53 schwenkbar gelagerter, in eine Raststellung, beispielsweise mittels einer Schenkelfeder, vorgespannter Raster 83 vorgesehen, mit dessen Hilfe der Spannhebel 53 an dem Überwurfelement 17 verriegelbar ist. Hierzu greift der Raster 83 in eine in dem Überwurfelement 17 ausgebildete Rastaufnahme ein und hintergreift dabei eine Rastkante der Rastaufnahme.

Darüber hinaus umfasst die Befestigungseinrichtung einen äußeren Kantenschutzring 85 und einen inneren Kantenschutzring 87. Der äußere Kantenschutzring 85 ist an der dem Anschlussabschnitt 11 abgewandten, radial inneren Kante des Überwurfelements 17 vorgesehen, insbesondere eingeclipst, und ist an seiner dem Anschlussabschnitt 11 abgewandten, radial inneren Kante abgeschrägt. Der innere Kantenschutzring 87 ist an der dem Überwurfelement 17 zugewandten, radial inneren Kante des Anschlussabschnitts 11 vorgesehen, insbesondere eingepresst, und ist an seiner dem Überwurfelement 17 zugewandten, radial inneren Kante abgeschrägt. Durch die beiden Kantenschutzringe 85, 87 kann zusätzlich eine Zentrierfunktion beim Einsetzen einer flanschförmigen Anbindungsstelle eines Verdampferkolbens gewährleistet werden. Insbesondere ist dabei der größte Innendurchmesser der Abschrägung des inneren Kantenschutzrings 87 nicht kleiner ist als der kleinste Innendurchmesser der Abschrägung des äußeren Kantenschutzrings 85. Ferner ist eine Dichteinrichtung 89 vorgesehen, die beim Koppeln des Überwurfelements 17 an den Anschlussabschnitt 11 zwischen der flanschförmigen Verbindungsstelle 75 des Verdampferkolbens 77 und dem Anschlussabschnitt 11 verklemmt wird.

### Bezuqszeichenliste

- 11: Anschlussabschnitt
- 13: Anschlussstutzen
- 15: erstes Eingriffselement
- 17: Überwurfelement
- 19: Bajonettring
- 21: Tragering
- 23: zweites Eingriffselement
- 25: Montageschraube
- 27: erste Schrägfläche
- 29: zweite Schrägfläche
- 31: Klemmelement
- 33: Ringsteg
- 35: Abschrägung
- 37: Abschrägung
- 39: Abschrägung
- 41: Abschrägung
- 43: Federring
- 47: Drehbewegung
- 49: Axialbewegung
- 51: kombinierte Radial- und Axialbewegung
- 53: Spannhebel
- 55: Vertiefung
- 57: Lenker
- 59: Spannelement
- 61: Zylinderstift
- 63: Steuerkurve
- 65: erster Abschnitt
- 67: zweiter Abschnitt
- 69: Endpunkt
- 71: Anlenkpunkt
- 73: Aufnahmeraum
- 75: flanschförmige Anbindungsstelle
- 77: Verdampferkolben
- 79: Spannschraube
- 81: Spannmutter
- 83: Raster
- 85: äußerer Kantenschutzring
- 87: innerer Kantenschutzring
- 89: Dichteinrichtung

## Patentansprüche

1. Rotationsverdampfer mit einem Rotationsantrieb und einer an dem Rotationsantrieb angebrachten Befestigungseinrichtung mit einem Aufnahmeraum (73) zur Aufnahme eines von dem Rotationsantrieb drehbaren Verdampferkolbens (77), wobei die Befestigungseinrichtung rotationsantriebsseitig einen insbesondere ringförmigen Anschlussabschnitt (11) und verdampferkolbenseitig ein mit dem Anschlussabschnitt (11) gekoppeltes insbesondere ringförmiges Überwurfelement (17) umfasst, das relativ zu dem Anschlussabschnitt (11) zwischen einer Ausgangsposition und einer Endposition verdrehbar ist,
**dadurch gekennzeichnet,**
**dass** die Befestigungseinrichtung zumindest ein Klemmelement (31) umfasst, das beim Verdrehen des Überwurfelements (17) relativ zu dem Anschlussabschnitt (11) aus der Ausgangsposition in die Endposition aus einer Freigabestellung radial nach innen in eine Haltestellung, in der das jeweilige Klemmelement (31) in den Aufnahmeraum (73) hineinragt, bewegt wird, um eine flanschförmige Anbindungsstelle (75) eines in dem Aufnahmeraum (73) der Befestigungseinrichtung aufgenommenen Verdampferkolbens (77) form- und/oderkraftschlüssig festzuhalten und diesen gegen eine Entnahme aus dem Aufnahmeraum (73) zu sichern.

2. Rotationsverdampfer nach Anspruch 1,
**dadurch gekennzeichnet,**
**dass** das jeweilige Klemmelement (31) beim Verdrehen des Überwurfelements (17) relativ zu dem Anschlussabschnitt (11) aus der Ausgangsposition in die Endposition radial nach innen und gleichzeitig axial auf den Anschlussabschnitt (11) zu bewegt wird.

3. Rotationsverdampfer nach Anspruch 1 oder 2,
**dadurch gekennzeichnet,**
**dass** der Anschlussabschnitt (11) an dem Rotationsantrieb, insbesondere einer Nabe des Rotationsantriebs, befestigt ist.

4. Rotationsverdampfer nach zumindest einem der vorstehenden Ansprüche,
**dadurch gekennzeichnet,**
**dass** das Überwurfelement (17) lösbar mit dem Anschlussabschnitt (11) koppelbar, insbesondere axial auf den Anschlussabschnitt (11) in die Ausgangsposition aufsetzbar ist, und/oder
**dass** die Kopplung des Überwurfelements (17) mit dem Anschlussabschnitt (11) schraubverbindungsfrei erfolgt, und/oder
**dass** das Überwurfelement (17) in einer oder mehreren diskreten Drehpositionen auf den Anschlussabschnitt (11) in die Ausgangsposition aufsetzbar ist.

5. Rotationsverdampfer nach zumindest einem der vorstehenden Ansprüche,
**dadurch gekennzeichnet,**
**dass** der Anschlussabschnitt (11) mehrere radial nach außen vorstehende erste Eingriffselemente (15) und das Überwurfelement (17) mehrere radial nach innen vorstehende zweite Eingriffselemente (23) umfasst, wobei die ersten Eingriffselemente (15) und die zweiten Eingriffselemente (23) in der Ausgangsposition kämmend ineinandergreifen und in einer verdrehten Position einander hintergreifen,
wobei, bevorzugt, die ersten Eingriffselemente (15) und die zweiten Eingriffselemente (23) jeweils in Umfangsrichtung gleichverteilt an dem Anschlussabschnitt (11) bzw. dem Überwurfelement (17) angeordnet sind.

6. Rotationsverdampfer nach zumindest einem der vorstehenden Ansprüche,
**dadurch gekennzeichnet,**
**dass** das jeweilige Klemmelement (31) zwischen dem Anschlussabschnitt (11) und dem Überwurfelement (17) angeordnet ist, und/oder dass beim Verdrehen des Überwurfelements (17) relativ zu dem Anschlussabschnitt (11) aus der Ausgangsposition in die Endposition das jeweilige Klemmelement (31) von dem Überwurfelement (17), insbesondere einem an den Überwurfelement (17) radial nach innen vorstehenden Ringsteg (33), axial gegen den Anschlussabschnitt (11), insbesondere ein jeweiliges erstes Eingriffselement (15), gedrückt wird.

7. Rotationsverdampfer nach zumindest einem der vorstehenden Ansprüche,
**dadurch gekennzeichnet,**
**dass** Mittel (27, 29) vorgesehen sind, die ein Verdrehen des Überwurfelements (17) relativ zu dem Anschlussabschnitt (11) aus der Ausgangsposition in die Endposition in eine Axialbewegung des Überwurfelements (17) relativ zu dem Anschlussabschnitt (11) umsetzen, wobei weitere Mittel (35, 37) vorgesehen sind, die die Axialbewegung des Überwurfelements (17) in die radiale Bewegung, insbesondere die radiale und gleichzeitig eine axiale Bewegung, des jeweiligen Klemmelements (31) umsetzen.

8. Rotationsverdampfer nach Anspruch 7,
**dadurch gekennzeichnet,**
**dass** die Mittel (27, 29) miteinander korrespondierende Schrägflächen (27, 29) umfassen, die an dem Anschlussabschnitt (11) einerseits, insbesondere an radial nach außen vorstehenden ersten Eingriffselementen (15), und dem Überwurfelement (17) andererseits, insbesondere an radial nach innen vorstehenden zweiten Eingriffselementen (23), ausgebildet sind, und/oder dass die weiteren Mittel (35, 37) umfassen, dass das jeweilige Klemmelement (31) an seiner dem Anschlussabschnitt (11) zugewandten, radial äußeren Kante abschrägt ist (35) und der Anschlussabschnitt (11), insbesondere ein jeweiliges erstes Eingriffselement (15), eine hiermit korrespondierende Abschrägung (37) aufweist, wodurch das jeweilige Klemmelement (31) beim Verdrehen des Überwurfelements (17) relativ zu dem Anschlussabschnitt (11) in die Endposition radial nach innen und axial auf den Anschlussabschnitt (11) zu bewegt wird.

9. Rotationsverdampfer nach zumindest einem der vorstehenden Ansprüche,
**dadurch gekennzeichnet,**
**dass** das jeweilige Klemmelement (31) an seiner dem Anschlussabschnitt (11) zugewandten, radial inneren Kante abgeschrägt ist (39), um mit einer hiermit korrespondierenden Abschrägung (41) an der flanschförmigen Anbindungsstelle (75) eines in der Befestigungseinrichtung aufgenommenen Verdampferkolbens (77) zusammenzuwirken.

10. Rotationsverdampfer nach zumindest einem der vorstehenden Ansprüche,
**dadurch gekennzeichnet,**
**dass** das jeweilige Klemmelement (31) aus seiner Haltestellung in die Freigabestellung vorgespannt ist,
wobei, bevorzugt, zur Vorspannung des jeweiligen Klemmelements (31) ein Federring (43) vorgesehen ist, der insbesondere an einer radialen Innenfläche des jeweiligen Klemmelements (31) angreift.

11. Rotationsverdampfer nach zumindest einem der vorstehenden Ansprüche,
**dadurch gekennzeichnet,**
**dass** das jeweilige Klemmelement (31) langestreckt und/oder teilkreisförmig ausgebildet ist, und/oder
**dass** mehrere Klemmelemente (31) in Umfangsrichtung gleichverteilt angeordnet sind, und/oder
**dass** das jeweilige Klemmelement (31) mit einem jeweiligen ersten Eingriffselement (15) des Anschlussabschnitts (11) zusammenwirkt.

12. Rotationsverdampfer nach zumindest einem der vorstehenden Ansprüche,
**dadurch gekennzeichnet,**
**dass** zum Verdrehen das Überwurfelement (17) mit einem Spannhebel (53) versehen ist, der mit einem Ende an einem Anlenkpunkt (71) schwenkbar an dem Überwurfelement (17) gelagert und zwischen einer geöffneten Stellung und einer geschlossenen Stellung, in der das jeweilige Klemmelement (31) die Haltestellung einnimmt, verstellbar ist.

13. Rotationsverdampfer nach Anspruch 12,
**dadurch gekennzeichnet,**
**dass** der Spannhebel (53) derart mit dem Überwurfelement (17) und dem Anschlussabschnitt (11) gekoppelt ist, dass das Verdrehen des Überwurfelements (17) relativ zu dem Anschlussabschnitt (11) aus der Ausgangsposition in die Endposition zweistufig erfolgt, wobei in einer ersten Stufe das Überwurfelement (17) mit geöffnetem Spannhebel (53) aus der Ausgangsposition um einen ersten Teilweg in eine Anschlagposition für den Spannhebel (53) verdreht wird, und wobei in einer zweiten Stufe der Spannhebel (53) geschlossen wird, um das Überwurfelement (17) aus der Anschlagposition um einen zweiten Teilweg in die Endposition zu verdrehen, wobei, bevorzugt, der erste Teilweg länger ist als der zweite Teilweg, insbesondere wenigstens zweimal länger, bevorzugt wenigstens viermal länger.

14. Rotationsverdampfer nach Anspruch 13,
**dadurch gekennzeichnet,**
**dass** das Zurückdrehen des Überwurfelements (17) relativ zu dem Anschlussabschnitt (11) aus der Endposition in die Ausgangsposition zweistufig erfolgt, wobei in einer ersten Stufe der Spannhebel (53) geöffnet wird, um das Überwurfelement (17) um den zweiten Teilweg aus der Endposition zurückzudrehen, und in einer zweiten Stufe das Überwurfelement (17) mit geöffnetem Spannhebel (53) in die Ausgangsposition zurückgedreht wird.

15. Rotationsverdampfer nach zumindest einem der Ansprüche 12 bis 14,
**dadurch gekennzeichnet,**
**dass** die Längserstreckung des Spannhebels (53) in Umfangsrichtung des Überwurfelements (17) verläuft, der Spannhebel (53) teilkreisförmig ausgebildet ist und/oder in der geschlossenen Stellung in einer radial äußeren Vertiefung (55) des Überwurfelements (17) aufgenommen ist, und/oder dass der Schwenkbereich des Spannhebels (53) zwischen der geöffneten Stellung und der geschlossenen Stellung nicht mehr als 120°, insbesondere nicht mehr als 100° beträgt, und/oder
**dass** der Spannhebel (53) beim Schließen als Kniehebel wirkt, um das Überwurfelement (17) aus der Anschlagposition um einen zweiten Teilweg in die Endposition zu verdrehen.

16. Rotationsverdampfer nach zumindest einem der Ansprüche 12 bis 15,
**dadurch gekennzeichnet,**
**dass** ein Lenker (57) vorgesehen ist, der mit einem ersten Ende schwenkbar an dem Anschlussabschnitt (11) gelagert ist und mit einem zweiten Ende über ein Führungselement (61), insbesondere einen Zylinderstift, mit einer an dem Spannhebel (53) ausgebildeten Steuerkurve (63), insbesondere einem Führungsschlitz, in Eingriff steht.

17. Rotationsverdampfer nach Anspruch 16,
**dadurch gekennzeichnet,**
**dass** das erste Ende des Lenkers (57) an einem Spannelement (59) schwenkbar gelagert ist, das in eine entsprechend ausgebildete Aufnahme des Anschlussabschnitts (11) eingesetzt ist, die ein Verdrehen des Spannelements (59) relativ zu dem Anschlussabschnitt (11) verhindert, wobei, bevorzugt, das Spannelement (59) zwischen zwei radial nach außen vorstehende Eingriffselemente (15) des Anschlussabschnitts (11) eingesetzt ist.

18. Rotationsverdampfer nach zumindest einem der Ansprüche 16 und 17,
**dadurch gekennzeichnet,**
**dass** die Steuerkurve (63) einen ersten, insbesondere geraden, Abschnitt (65) und einen sich daran an einem Knickpunkt winklig anschließenden zweiten, insbesondere geraden, Abschnitt (67) mit Endpunkt (69) aufweist, wobei, bevorzugt, der erste Abschnitt (65) in der geschlossenen Stellung des Spannhebels (53) tangential und/oder in der geöffneten Stellung radial zu dem Überwurfelement (17) verläuft und/oder der zweite Abschnitt (67) in der geschlossenen Stellung des Spannhebels (53) von dem Überwurfelement (17) weg gegenüber dem ersten Abschnitt (65) abgewinkelt ist.

19. Rotationsverdampfer nach Anspruch 18,
**dadurch gekennzeichnet,**
**dass** das Führungselement (61) in der Ausgangsposition des Überwurfelements (17) sich an einem Ausgangspunkt in dem ersten Abschnitt (65) befindet und beim Verdrehen des Überwurfelements (17) relativ zu dem Anschlussabschnitt (11) um einen ersten Teilweg an den Endpunkt (69) verfahren wird und/oder dass das Führungselement (61) beim Verdrehen des Überwurfelements (17) relativ zu dem Anschlussabschnitt (11) um einen zweiten Teilweg am Endpunkt (69) verharrt, und/oder dass das Führungselement (61) beim Zurückdrehen des Überwurfelements (17) relativ zu dem Anschlussabschnitt (11) um den zweiten Teilweg an den Knickpunkt verfahren wird und/oder dass das Führungselement (61) beim Zurückdrehen des Überwurfelements (17) relativ zu dem Anschlussabschnitt (11) um den ersten Teilweg an den Ausgangspunkt verfahren wird.

20. Rotationsverdampfer nach zumindest einem der Ansprüche 16 bis 19,
**dadurch gekennzeichnet,**
**dass** der Lenker (57) längenverstellbar ausgebildet ist, insbesondere eine Spannschraube (79) und eine Spannmutter (81) umfasst, wobei, bevorzugt, über die Länge des Lenkers (57) ein Ausgangspunkt des Führungselements (61) in dem ersten Abschnitt (65) der Steuerkurve (63) einstellbar ist.

21. Rotationsverdampfer nach zumindest einem der Ansprüche 12 bis 20,
**dadurch gekennzeichnet,**
**dass** eine Rasteinrichtung (83) vorgesehen ist, um den Spannhebel (53) in der geschlossenen Stellung am Überwurfelement (17) zu verriegeln.

## Claims

1. A rotary evaporator comprising a rotary drive and a fastening device attached to the rotary drive and having a receiving space (73) for receiving an evaporator flask (77) rotatable by the rotary drive, wherein the fastening device comprises a connector section (11), in particular a ring-shaped connector section, at the rotary drive side and a retainer element (17), in particular a ring-shaped retainer element, at the evaporator flask side which is coupled to the connector section (11) and which is rotatable relative to the connector section (11) between a starting position and an end position,
**characterized in that**
the fastening device comprises at least one clamping element (31) which is moved, on the rotation of the retainer element (17) relative to the connector section (11) from the starting position into the end position, from a release position radially inwardly into a holding position in which the respective clamping element (31) projects into the receiving space (73) to hold a flange-shaped connection region (75) of an evaporator flask (77) received in the receiving space (73) of the fastening device in a form-fitting and/or force-fitting manner and to secure it against a removal from the receiving space (73).

2. A rotary evaporator in accordance with claim 1,
**characterized in that**
the respective clamping element (31) is moved radially inwardly and simultaneously axially toward the connector section (11) on the rotation of the retainer element (17) relative to the connector section (11) from the starting position into the end position.

3. A rotary evaporator in accordance with claim 1 or claim 2,
**characterized in that**
the connector section (11) is fastened to the rotary drive, in particular to a hub of the rotary drive.

4. A rotary evaporator in accordance with at least one of the preceding claims,
**characterized in that**
the retainer element (17) is releasably couplable to the connector section (11) and is in particular axially placeable onto the connector section (11) into the starting position; and/or
**in that** the coupling of the retainer element (17) to the connector section (11) takes place free of a screw connection; and/or
**in that** the retainer element (17) can be placed onto the connector section (11) into the starting position in one or more discrete rotational positions.

5. A rotary evaporator in accordance with at least one of the preceding claims,
**characterized in that**
the connector section (11) comprises a plurality of radially outwardly projecting first engagement elements (15) and the retainer element (17) comprises a plurality of radially inwardly projecting second engagement elements (23), with the first engagement elements (15) and the second engagement elements (23) meshingly engaging into one another in the starting position and engaging behind one another in a rotated position, with, preferably, the first engagement elements (15) and the second engagement elements (23) each being arranged evenly distributed in the peripheral direction at the connector section (11) and at the retainer element (17), respectively.

6. A rotary evaporator in accordance with at least one of the preceding claims,
**characterized in that**
the respective clamping element (31) is arranged between the connector section (11) and the retainer element (17); and/or
**in that**, on the rotation of the retainer element (17) relative to the connector section (11) from the starting position into the end position, the respective clamping element (31) is pressed by the retainer element (17), in particular by a ring web (33) projecting radially inwardly at the retainer element (17), axially toward the connector section (11), in particular toward a respective first engagement element (15).

7. A rotary evaporator in accordance with at least one of the preceding claims,
**characterized in that**
means (27, 29) are provided which convert a rotation of the retainer element (17) relative to the connector section (11) from the starting position into the end position into an axial movement of the retainer element (17) relative to the connector section (11), with further means (35, 37) being provided which convert the axial movement of the retainer element (17) into the radial movement, in particular the radial, and simultaneously, an axial movement, of the respective clamping element (31).

8. A rotary evaporator in accordance with claim 7,
**characterized in that**
the means (27, 29) comprise mutually corresponding sloping surfaces (27, 29) which are formed at the connector section (11), on the one hand, in particular at radially outwardly projecting first engagement elements (15), and at the retainer element (17), on the other hand, in particular at radially inwardly projecting second engagement elements (23); and/or
**in that** the further means (35, 37) comprise the respective clamping element (31) being chamfered (35) at its radially outer edge facing the connector section (11) and the connector section (11), in particular a respective first engagement element (15), having a chamfer (37) corresponding hereto, whereby the respective clamping element (31) is moved radially inwardly and axially toward the connector section (11) on the rotation of the retainer element (17) relative to the connector section (11) into the end position.

9. A rotary evaporator in accordance with at least one of the preceding claims,
**characterized in that**
the respective clamping element (31) is chamfered (39) at its radially inner edge facing the connector section (11) to cooperate with a chamfer (41) corresponding hereto at the flange-shaped connection region (75) of an evaporator flask (77) received in the fastening device.

10. A rotary evaporator in accordance with at least one of the preceding claims,
**characterized in that**
the respective clamping element (31) is preloaded from its holding position into the release position,
with, preferably, a circlip (43) being provided to preload the respective clamping element (31), said circlip (43) in particular engaging at a radial inner surface of the respective clamping element (31).

11. A rotary evaporator in accordance with at least one of the preceding claims,
**characterized in that**
the respective clamping element (31) is elongated and/or is of part-circle shape; and/or
**in that** a plurality of clamping elements (31) are arranged evenly distributed in the peripheral direction; and/or
**in that** the respective clamping element (31) cooperates with a respective first engagement element (15) of the connector section (11).

12. A rotary evaporator in accordance with at least one of the preceding claims,
**characterized in that**
the retainer element (17) is provided with a tensioning lever (53) for rotation, with an end of said tensioning lever (53) being pivotably supported at an articulation point (71) at the retainer element (17) and being adjustable between an open position and a closed position in which the respective clamping element (31) adopts the holding position.

13. A rotary evaporator in accordance with claim 12,
**characterized in that**
the tensioning lever (53) is coupled to the retainer element (17) and to the connector section (11) such that the rotation of the retainer element (17) relative to the connector section (11) from the starting position into the end position takes place in two stages, with in a first stage the retainer element (17) being rotated with an open tensioning lever (53) from the starting position by a first part distance into an abutment position for the tensioning lever (53), and with in a second stage the tensioning lever (53) being closed to rotate the retainer element (17) from the abutment position by a second part distance into the end position,
with, preferably, the first part distance being longer than the second part distance, in particular at least twice as long, preferably at least four times as long.

14. A rotary evaporator in accordance with claim 13,
**characterized in that**
the rotating back of the retainer element (17) relative to the connector section (11) from the end position into the starting position takes place in two stages, with in a first stage the tensioning lever (53) being opened to rotate the retainer element (17) back by the second part distance from the end position, and with in a second stage the retainer element (17) being rotated back into the starting position with an open tensioning lever (53).

15. A rotary evaporator in accordance with at least one of the claims 12 to 14,
**characterized in that**
the longitudinal extent of the tensioning lever (53) extends in the peripheral direction of the retainer element (17), the tensioning lever (53) is of part-circle shape and/or is received in a radially outer recess (55) of the retainer element (17) in the closed position; and/or
**in that** the pivot range of the tensioning lever (53) between the open position and the closed position amounts to no more than 120°, in particular no more than 100°; and/or
**in that** the tensioning lever (53) acts as a toggle lever on closing to rotate the retainer element (17) from the abutment position by a second part distance into the end position.

16. A rotary evaporator in accordance with at least one of the claims 12 to 15,
**characterized in that**
a control arm (57) is provided whose first end is pivotably supported at the connector section (11) and whose second end is in engagement via a guide element (61), in particular a cylinder pin, with a control cam (63), in particular a guide slot, formed at the tensioning lever (53).

17. A rotary evaporator in accordance with claim 16,
**characterized in that**
the first end of the control arm (57) is pivotably supported at a tensioning element (59) which is inserted into a correspondingly configured mount of the connector section (11) which prevents a rotation of the tensioning element (59) relative to the connector section (11),
with, preferably, the tensioning element (59) being inserted between two radially outwardly projecting engagement elements (15) of the connector section (11).

18. A rotary evaporator in accordance with at least one of the claims 16 to 17,
**characterized in that**
the control cam (63) has a first, in particular straight, section (65) and a second, in particular straight, section (67) adjoining it at an angle at a kink point and having an end point (69),
with, preferably, the first section (65) extending tangentially in the closed position of the tensioning lever (53) and/or extending radially to the retainer element (17) in the open position; and/or **in that** the second section (67) is angled away from the retainer element (17) with respect to the first section (65) in the closed position of the tensioning lever (53).

19. A rotary evaporator in accordance with claim 18,
**characterized in that**
the guide element (61) is at a starting point in the first section (65) in the starting position of the retainer element (17) and is traveled toward the end point (69) on the rotation of the retainer element (17) relative to the connector section (11) by a first part distance; and/or **in that** the guide element (61) remains at the end point (69) on the rotation of the retainer element (17) relative to the connector section (11) by a second part distance; and/or
**in that** the guide element (61) is traveled toward the kink point on the rotating back of the retainer element (17) relative to the connector section (11) by the second part distance; and/or **in that** the guide element (61) is traveled toward the starting point on the rotating back of the retainer element (17) relative to the connector section (11) by the first part distance.

20. A rotary evaporator in accordance with at least one of the claims 16 to 19,
**characterized in that**
the control arm (57) is longitudinally adjustable and in particular comprises a tensioning screw (78) and a clamping nut (81),
with, preferably, a starting point of the guide element (61) in the first section (65) of the control cam (63) being adjustable via the length of the control arm (57).

21. A rotary evaporator in accordance with at least one of the claims 12 to 20,
**characterized in that**
a latching device (83) is provided to latch the tensioning lever (53) to the retainer element (17) in the closed position.

## Revendications

1. Évaporateur rotatif comportant un entraînement en rotation et un moyen de fixation monté sur l'entraînement en rotation et pourvu d'un espace de logement (73) pour loger un flacon d'évaporateur (77) pouvant être tourné par l'entraînement en rotation, le moyen de fixation comprenant du côté entraînement en rotation une portion de raccordement (11) en particulier de forme annulaire et du côté flacon d'évaporateur un élément d'accouplement (17) accouplé à la portion de raccordement (11) et en particulier de forme annulaire, qui est mobile en rotation par rapport à la portion de raccordement (11) entre une position initiale et une position finale,
**caractérisé en ce que**
le moyen de fixation comprend au moins un élément de serrage (31) qui, lors de la rotation de l'élément d'accouplement (17) par rapport à la portion de raccordement (11) depuis la position initiale jusque dans la position finale, est déplacé depuis une position de libération radialement vers l'intérieur jusque dans une position de retenue dans laquelle l'élément de serrage (31) respectif pénètre dans l'espace de logement (73), afin de retenir par coopération de forme et/ou de force un emplacement de liaison (75) en forme de bride d'un flacon d'évaporateur (77) logé dans l'espace de logement (73) du moyen de fixation et de bloquer ledit flacon à l'encontre d'un enlèvement hors de l'espace de logement (73).

2. Évaporateur rotatif selon la revendication 1,
**caractérisé en ce que**
lors de la rotation de l'élément d'accouplement (17) par rapport à la portion de raccordement (11) depuis la position initiale jusque dans la position finale, l'élément de serrage (31) respectif est déplacé radialement vers l'intérieur et simultanément axialement vers la portion de raccordement (11).

3. Évaporateur rotatif selon la revendication 1 ou 2,
**caractérisé en ce que**
la portion de raccordement (11) est fixée à l'entraînement en rotation, en particulier à un moyeu de l'entraînement en rotation.

4. Évaporateur rotatif selon l'une au moins des revendications précédentes,
**caractérisé en ce que**
l'élément d'accouplement (17) est susceptible d'être accouplé de façon détachable à la portion de raccordement (11), en particulier d'être rapporté axialement sur la portion de raccordement (11) dans la position initiale, et/ou
l'accouplement de l'élément d'accouplement (17) à la portion de raccordement (11) s'effectue sans liaison vissée, et/ou
l'élément d'accouplement (17) est susceptible d'être rapporté sur la portion de raccordement (11) dans la position initiale, dans une ou dans plusieurs positions de rotation discrètes.

5. Évaporateur rotatif selon l'une au moins des revendications précédentes,
**caractérisé en ce que**
la portion de raccordement (11) comprend plusieurs premiers éléments d'engagement (15) dépassant radialement vers l'extérieur, et l'élément d'accouplement (17) comprend plusieurs seconds éléments d'engagement (23) dépassant radialement vers l'intérieur, les premiers éléments d'engagement (15) et les seconds éléments d'engagement (23) venant s'engager par engrènement les uns dans les autres dans la position initiale et venant s'engager par l'arrière les uns les autres dans une position tournée, et de préférence, les premiers éléments d'engagement (15) et les seconds éléments d'engagement (23) sont agencés chacun en répartition régulière en direction périphérique sur la portion de raccordement (11) ou sur l'élément d'accouplement (17).

6. Évaporateur rotatif selon l'une au moins des revendications précédentes,
**caractérisé en ce que**
l'élément de serrage (31) respectif est agencé entre la portion de raccordement (11) et l'élément d'accouplement (17), et/ou **en ce que** lors de la rotation de l'élément d'accouplement (17) par rapport à la portion de raccordement (11) depuis la position initiale jusque dans la position finale, l'élément de serrage (31) respectif est pressé axialement contre la portion de raccordement (11), en particulier contre un premier élément d'engagement (15) respectif, par l'élément d'accouplement (17), en particulier par une barrette annulaire (33) dépassant de l'élément d'accouplement (17) radialement vers l'intérieur.

7. Évaporateur rotatif selon l'une au moins des revendications précédentes,
**caractérisé en ce que**
il est prévu des moyens (27, 29) qui convertissent une rotation de l'élément d'accouplement (17) par rapport à la portion de raccordement (11) depuis la position initiale jusque dans la position finale en un mouvement axial de l'élément d'accouplement (17) par rapport à la portion de raccordement (11), et il est prévu d'autres moyens (35, 37) qui convertissent le mouvement axial de l'élément d'accouplement (17) en le mouvement radial, en particulier en le mouvement radial et simultanément axial, de l'élément de serrage (31) respectif.

8. Évaporateur rotatif selon la revendication 7,
**caractérisé en ce que**
les moyens (27, 29) comprennent des surfaces obliques (27, 29) qui correspondent les unes avec les autres et qui sont réalisées d'une part sur la portion de raccordement (11), en particulier sur des premiers éléments d'engagement (15) dépassant radialement vers l'extérieur, et d'autre part sur l'élément d'accouplement (17), en particulier sur des seconds éléments d'engagement (23) dépassant radialement vers l'intérieur, et/ou **en ce que** les autres moyens (35, 37) incluent que l'élément de serrage (31) respectif est chanfreiné (35) au niveau de son arête radialement extérieure dirigée vers la portion de raccordement (11), et que la portion de raccordement (11), en particulier un premier élément d'engagement (15) respectif, présente un chanfrein (37) correspondant, moyennant quoi l'élément de serrage (31) respectif est déplacé radialement vers l'intérieur et axialement vers la portion de raccordement (11), lors de la rotation de l'élément d'accouplement (17) par rapport à la portion de raccordement (11) jusque dans la position finale.

9. Évaporateur rotatif selon l'une au moins des revendications précédentes,
**caractérisé en ce que**
l'élément de serrage (31) respectif est chanfreiné (39) au niveau de son arête radialement intérieure dirigée vers la portion de raccordement (11), afin de coopérer avec un chanfrein correspondant (41) à l'emplacement de liaison (75) en forme de bride d'un flacon d'évaporateur (77) logé dans le moyen de fixation.

10. Évaporateur rotatif selon l'une au moins des revendications précédentes,
**caractérisé en ce que**
l'élément de serrage (31) respectif est précontraint depuis sa position de retenue vers la position de libération, et
de préférence, pour la précontrainte de l'élément de serrage (31) respectif, il est prévu un anneau élastique (43) qui s'applique en particulier sur une surface intérieure radiale de l'élément de serrage (31) respectif.

11. Évaporateur rotatif selon l'une au moins des revendications précédentes,
**caractérisé en ce que**
l'élément de serrage (31) respectif est réalisé de façon allongée et/ou en forme de cercle partiel, et/ou
plusieurs éléments de serrage (31) sont agencés en répartition régulière en direction périphérique, et/ou
l'élément de serrage (31) respectif coopère avec un premier élément d'engagement (15) respectif de la portion de raccordement (11).

12. Évaporateur rotatif selon l'une au moins des revendications précédentes,
**caractérisé en ce que**
pour la rotation, l'élément d'accouplement (17) est pourvu d'un levier de serrage (53) qui est monté sur l'élément d'accouplement (17) de façon mobile en basculement par une extrémité à un point d'articulation et qui est réglable entre une position ouverte et une position fermée dans laquelle l'élément de serrage (31) respectif prend la position de retenue.

13. Évaporateur rotatif selon la revendication 12,
**caractérisé en ce que**
le levier de serrage (53) est accouplé à l'élément d'accouplement (17) et à la portion de raccordement (11) de telle sorte que la rotation de l'élément d'accouplement (17) par rapport à la portion de raccordement (11) depuis la position initiale jusque dans la position finale s'effectue en deux étapes, et dans une première étape, le levier de serrage (53) étant ouvert, l'élément d'accouplement (17) est tourné d'un premier trajet partiel depuis la position initiale jusque dans une position de butée pour le levier de serrage (53), et dans une seconde étape, le levier de serrage (53) est fermé pour faire tourner l'élément d'accouplement (17) d'un second trajet partiel depuis la position de butée jusque dans la position finale, et
de préférence, le premier trajet partiel est plus long que le second trajet partiel, en particulier au moins deux fois plus long, de préférence au moins quatre fois plus long.

14. Évaporateur rotatif selon la revendication 13,
**caractérisé en ce que**
la rotation en retour de l'élément d'accouplement (17) par rapport à la portion de raccordement (11) depuis la position finale jusque dans la position initiale s'effectue en deux étapes, et dans une première étape, le levier de serrage (53) est ouvert pour faire tourner en retour l'élément d'accouplement (17) du second trajet partiel depuis la position finale, et dans une seconde étape, l'élément d'accouplement (17) est tourné en retour jusque dans la position initiale, le levier de serrage (53) étant ouvert.

15. Évaporateur rotatif selon l'une au moins des revendications 12 à 14,
**caractérisé en ce que**
l'extension longitudinale du levier de serrage (53) s'étend en direction périphérique de l'élément d'accouplement (17), le levier de serrage (53) est réalisé en forme de cercle partiel et/ou est logé, dans la position fermée, dans un renfoncement (55) radialement extérieur de l'élément d'accouplement (17), et/ou **en ce que**
la plage de basculement du levier de serrage (53) entre la position ouverte et la position fermée n'est pas plus de 120°, en particulier pas plus de 100°, et/ou **en ce que**
lors de la fermeture, le levier de serrage (53) fait office de levier à genouillère pour faire tourner l'élément d'accouplement (17) d'un second trajet partiel depuis la position de butée jusque dans la position finale.

16. Évaporateur rotatif selon l'une au moins des revendications 12 à 15,
**caractérisé en ce que**
il est prévu un bras (57) qui est monté par une première extrémité de façon mobile en basculement sur la portion de raccordement (11) et qui est en engagement, par une seconde extrémité, avec une came de commande (63), en particulier une fente de guidage réalisée sur le levier de serrage (53), à l'aide d'un élément de guidage (61), en particulier d'une tige cylindrique.

17. Évaporateur rotatif selon la revendication 16,
**caractérisé en ce que**
la première extrémité du bras (57) est montée de façon mobile en basculement sur un élément de serrage (59) qui est inséré dans un logement correspondant de la portion de raccordement (11), qui empêche une rotation de l'élément de serrage (59) par rapport à la portion de raccordement (11),
et
de préférence, l'élément de serrage (59) est inséré entre deux éléments d'engagement (15) de la portion de raccordement (11) qui dépassent radialement vers l'extérieur.

18. Évaporateur rotatif selon l'une au moins des revendications 16 et 17,
**caractérisé en ce que**
la came de commande (63) comprend une première portion (65) en particulier rectiligne et une seconde portion (67) en particulier rectiligne qui s'y raccorde sous un angle à un point d'inflexion et qui présente un point final (69),
et
de préférence, dans la position fermée du levier de serrage (53), la première portion (65) s'étend tangentiellement et/ou, dans la position ouverte, radialement par rapport à l'élément d'accouplement (17), et/ou dans la position fermée du levier de serrage (53), la seconde portion (67) est coudée par rapport à la première portion (65) à partir de l'élément d'accouplement (17).

19. Évaporateur rotatif selon la revendication 18,
**caractérisé en ce que**
dans la position initiale de l'élément d'accouplement (17), l'élément de guidage (61) se trouve à un point initial dans la première portion (65), et lors de la rotation de l'élément d'accouplement (17) par rapport à la portion de raccordement (11) d'un premier trajet partiel, il est déplacé jusqu'au point final (69), et/ou **en ce que**
lors de la rotation de l'élément d'accouplement (17) d'un second trajet partiel par rapport à la portion de raccordement (11), l'élément de guidage (61) demeure au point final (69), et/ou
lors de la rotation en retour de l'élément d'accouplement (17) du second trajet partiel par rapport à la portion de raccordement (11), l'élément de guidage (61) est déplacé jusqu'au point d'inflexion, et/ou lors de la rotation en retour de l'élément d'accouplement (17) du premier trajet partiel par rapport à la portion de raccordement (11), l'élément de guidage (61) est déplacé jusqu'au point initial.

20. Évaporateur rotatif selon l'une au moins des revendications 16 à 19,
**caractérisé en ce que**
le bras (57) est réalisé de façon réglable en longueur et comprend en particulier une vis de serrage (79) et un écrou de serrage (81), et
de préférence, un point initial de l'élément de guidage (61) dans la première portion (65) de la came de commande (63) est réglable sur la longueur du bras (57).

21. Évaporateur rotatif selon l'une au moins des revendications 12 à 20,
**caractérisé en ce que**
il est prévu un moyen d'enclenchement (83) pour verrouiller le levier de serrage (53) sur l'élément d'accouplement (17) dans la position fermée.
